# EUROPÄISCHE PATENTSCHRIFT

(11) **EP 0 361 103 B1**
(45) Veröffentlichungstag und Bekanntmachung des Hinweises auf die Patenterteilung: **11.01.1995**
(21) Anmeldenummer: 89115799.2
(22) Anmeldetag: 26.08.1989
(51) Int. Cl.: C08G 8/34, C09D 11/10

(54) **Kondensationsprodukte auf Basis von Kolophonium**
Condensation products based on rosin
Produits de condensation à base de colophane

(30) Priorität: 14.09.1988 DE 3831242
(43) Veröffentlichungstag der Anmeldung: 04.04.1990
(73) Patentinhaber: BASF Lacke + Farben AG, 70442 Stuttgart (DE)
(72) Erfinder: Prantl, Bernhard, Dr., D-6520 Worms 1 (DE); Walz, Rolf, D-7255 Rutesheim (DE); Stark, Erwin, Dr., D-7325 Bad Boll (DE)
(74) Vertreter: Welzel, Gunther, Dr.

(56) Entgegenhaltungen:
- EP-A- 0 041 838
- DE-A- 1 570 349
- DE-A- 3 022 876

## Beschreibung

Die vorliegende Erfindung betrifft Kondensationsprodukte auf Basis von Kolophonium, erhältlich durch
A) Umsetzung von
   100 Gew.-Teilen Kolophonium (Komponente I)
   10-150 Gew.-Teilen einer in p-Stellung C₁-C₁₂-alkylsubstituierten aromatischen Monohydroxyverbindung oder in p-Stellung zu einer der Hydroxyl-Gruppen C₁-C₁₂-alkylsubstituierten aromatischen Dihydroxyverbindung (Komponente II) und
   3-50 Gew.-Teilen Formaldehyd oder einer Formaldehyd liefernden Verbindung (Komponente III)
   bei 50-250°C in Gegenwart einer Base, wobei aus den Komponenten II und III zunächst auch ein Vorkondensat (Resol) des mittleren Kondensationsgrades 2 bis 20 hergestellt werden kann, welches dann mit Komponente I umgesetzt wird,
B) weitere Umsetzung des in Stufe A gebildeten Kondensationsproduktes (A) bei 150-250°C mit
   4-40 Gew.-Teilen einer α,β-ungesättigten C₃- oder C₄-Mono- oder Dicarbonsäure oder mit Maleinsäureanhydrid (Komponente IV) und
C₁) Umsetzung des in Stufe B gebildeten Adduktes (B) bei 100-200°C mit
   3-100 Gew.-Teilen eines mindestens einfach ungesättigten aliphatischen ein- oder zweiwertigen Alkohols oder Amins oder eines mindestens einfach ungesättigten C₂-C₁₂-Aminoalkohols (Komponente V) oder
C₂) Umsetzung von (B) mit
   2-30 Gew.-Teilen eines C₂-C₄-Alkylenoxids oder eines C₂-C₁₂-Alkandiols oder Aminoalkohols (Komponente VI) bei 100-200°C und danach mit
   10-100 Gew.-Teilen einer mindestens einfach ungesättigten C₈-C₄₀-Fettsäure (Komponente VII) bei 150-250°C,
   mit der Maßgabe, daß die molare Menge von Komponente (VII) 0,2-1 mol pro mol (VI) beträgt
oder erhältlich durch
D) Umsetzung von
   100 Gew.-Teilen Kolophonium (I) mit
   5-40 Gew.-Teilen Komponente (IV)
   bei 150-250°C,
E) Umsetzung des in Stufe D erhaltenen Adduktes (D) bei 100-200°C mit
   2-30 Gew.-Teilen eines C₂-C₁₂-Aminoalkohols (VIa),
F) weitere Umsetzung des in Stufe E erhaltenen Produktes (E) bei 50-250°C mit
   10-150 Gew.-Teilen der Komponente II und
   3-50 Gew.-Teilen der Komponente III
   in Gegenwart einer Base oder mit
   10-200 Gew.-Teilen eines aus den Komponenten II und III vorgebildeten Resols des mittleren Kondensationsgrades 2 bis 20 und
G) Umsetzung des in Stufe F erhaltenen Kondensationsproduktes (F) bei 150-250°C mit
   10-100 Gew.-Teilen der Komponente VII in den unter (C₂) genannten Molverhältnissen (VII):(VI).

Weiterhin betrifft die Erfindung Verfahren zur Herstellung dieser Kondensationsprodukte, deren Verwendung als Bindemittel für Druckpasten sowie diese Bindemittel enthaltende Druckpasten.

Aus der JP-A 075 771, der JP-A 104 025 und der US-A 4 643 848 sind Kondensationsprodukte aus Kolophonium, Maleinsäureanhydrid und Phenolharzen bekannt, die als Bindemittel für Drucktinten empfohlen werden.

Die Verwendung derartiger Kondensationsprodukte für die Verbesserung der Alkalibeständigkeit von Isoliermaterialien ist ferner in der SU-A 670 599 beschrieben.

Nachteilig an diesen Harzen ist jedoch, daß sie nicht schnell genug aushärten und keine ausreichende Waschfestigkeit aufweisen.

Diese Nachteile wirken sich bei der Verwendung derartiger Harze als Bindemittel in Druckpasten, vor allem solchen für das Tiefdruckverfahren, besonders ungünstig aus.

Solche Druckpasten müssen nämlich folgenden Anforderungen genügen:
- Klebefreiheit, damit nicht ein bedrucktes Blatt am nächsten haftet und damit man ohne Zwischenblatt ("Durchschuß") auskommt;
- gute Laugenlöslichkeit, damit überschüssige Druckpaste schnell und sicher vom Druckzylinder entfernt werden kann;
- gute Alkalibeständigkeit nach dem Aushärten und
- gute Löslichkeit in Mineralölen.

Da die bisher bekannten Bindemittel diese Anforderungen nur zum Teil erfüllen, lag der Erfindung die Aufgabe zugrunde, allen geschilderten Mängeln abzuhelfen.

Demgemäß wurden die eingangs definierten Kondensationsprodukte und die hierdurch definierten Verfahren zu ihrer Herstellung sowie deren Verwendung als Bindemittel in Druckpasten und diese Bindemittel enthaltende Druckpasten gefunden.

Die erfindungsgemäßen Kondensationsprodukte sind über die Stufen A-C₁ bzw. in einer Variante A-C₂ oder, in anderer Reihenfolge der Reaktionsschritte, über die Stufen D-G erhältlich und unterscheiden sich etwas je nach diesen Herstellungsarten.

Für die einzelnen Stufen gelten folgende Vorschriften und Empfehlungen:

### Stufe A:

Das als Basisstoff dienende Kolophonium (Komponente I) besteht im wesentlichen aus vier Doppelbindungsisomeren, die miteinander im Gleichgewicht stehen und unter denen die Laevopimarsäure 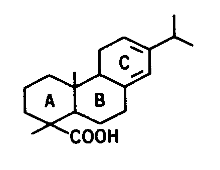
der Diels-Alder- und en-Reaktion mit den definitionsgemäßen α,β-ungesättigten Säuren und Maleinsäureanhydrid (Komponenten IV) zugänglich ist.

Als Komponente (II) kommen vornehmlich p-Alkylphenole in Betracht, wobei als Alkylreste C₄-C₁₀-Alkylgruppen bevorzugt werden. Gut geeignete Verbindungen (II) sind beispielsweise solche, in denen die Alkylgruppe den Butyl-, Isobutyl-, tert.-Butyl-, Hexyl-, 2-Ethylhexyl-, Octyl- oder den Nonylrest bedeuten.

Weitere Verbindungen (II) sind u.a. p-Methylnapht-1-ol und z.B. auch Dihydroxyverbindungn wie 4,4'-Dihydroxydiphenylmethan und 2,2-(4,4'-Dihydroxydiphenyl)-propan.

Die Menge von (II) beträgt 10-150, vorzugsweise 20 bis 100 Gew.-Teile pro 100 Gew.-Teilen des Kolophoniums (I).

Der Formaldehyd (Komponente III) kann als wäßrige oder organische Lösung oder als Formaldehyd liefernde Verbindung wie Paraformaldehyd eingesetzt werden. Die Menge des Formaldehyds wird zweckmäßigerweise so bemessen, daß sie bei Umsetzung mit (II) einem Kondensationsgrad von 2 bis 20 entspricht, theoretisch also etwa 1,05 bis 1,5 mol III pro Mol II. In der Praxis kann es sich aber empfehlen, den Formaldehyd im Überschuß bis zu etwa 4 mol pro Mol II einzusetzen.

Die Kondensationsreaktion findet in Gegenwart einer Base statt, und zwar vorzugsweise einer Mineralbase wie Natriumhydroxid oder Magnesiumoxid. Auch starke tertiäre Stickstoffbasen wie Triethylamin sind als Kondensationskatalysatoren geeignet. Die Menge dieser Basen liegt im allgemeinen zwischen 2 und 30 mol-% der Menge der Komponente II.

Man kann geschmolzenes Kolophonium vorlegen, dieses dann mit den Komponenten (II) und (III) und Base versetzen und das Gemisch solange bei 50-150°C, vorzugsweise bei 90-120°C reagieren lassen, bis der gewünschte Kondensationsgrad erreicht ist. Überschüssiger Formaldehyd wird sodann abgetrennt.

Anschließend wird auf 150-250°C, vorzugsweise auf 190-230°C erhitzt.

In einer anderen, etwas leichter reproduzierbaren Ausführungsform stellt man aus den Komponenten (II) und (III) bei 50-120°C zunächst das Resol her, welches man anschließend bei 150-250°C, vorzugsweise bei 190-230°C, mit dem Kolophonium umsetzt.

In beiden Ausführungsformen kann man ein Lösungsmittel, beispielsweise Toluol oder Wasser mitverwenden, welches man während oder nach der Reaktion zweckmäßigerweise abdestilliert.

Um das Entweichen leicht flüchtiger Reaktionspartner zu vermeiden, kann es sich empfehlen, die Resolbildung bei 90-120°C in einem geschlossenen Gefäß unter Eigendruck, etwa bis zu 20 bar, vorzunehmen.

Die Verknüpfung des Resols mit dem Kolophonium erfolgt überwiegend an den Ringen B oder C.

Das Kondensationsprodukt (A) ist eine feste, bräunliche Masse, die einen Erweichungspunkt von etwa 90 bis 190°C hat.

### Stufe B:

Das Kondensationsprodukt (A) kann mit einer α,β-ungesättigten C₃- oder C₄-Mono- oder Dicarbonsäure (Komponente IV) im Sinne einer Diels-Alder-Reaktion umgesetzt werden.

Als Komponente (IV) kommen Maleinsäure, Fumarsäure oder Acrylsäure sowie vorzugsweise Maleinsäureanhydrid in Betracht. Die Menge an (IV) entspricht 4 - 40, vorzugsweise 6-30 Gew.-Teilen pro 100 Gew.-Teilen Kolophonium.

Man kann das Kondensationsprodukt (A) vorlegen und dann mit der Komponente (IV) versetzen. Die Umsetzung wird bei 150-250°C, vorzugsweise bei 180-220°C solange durchgeführt, bis die Komponente (IV) weitgehend umgesetzt ist. Zweckmäßigerweise gibt man die Komponente (IV) bei einer erhöhten Temperatur, die etwa im Bereich der Umsetzungstemperatur liegt, zu.

Man kann auch in Gegenwart eines Lösungsmittels, beispielsweise Xylol, arbeiten.

Üblicherweise wird die Umsetzung bei Normaldruck vorgenommen, kann aber auch in einem geschlossenen System bei etwa 1 bis 6 bar ausgeführt werden.

Das Addukt (B) ist eine feste, bräunliche Masse mit einem Erweichungspunkt von 100-200°C.

### Stufe C:

C₁) Als Komponente (V) können mindestens einfach ungesättigte aliphatische ein- oder zweiwertige Alkohole oder Amine mit einer Kettenlänge von 3 bis 20 C-Atomen eingesetzt weden. Besonders geeignete Verbindungen sind u.a. Oleylalkohol, Oleylamin oder Diallylamin. (V) kann aber auch ein mindestens einfach ungesättigter C₂-C₁₂-Aminoalkohol, beispielsweise 5-Amino-2,5-dimethyl-3-hexen-2-ol sein. Pro 100 Gew.-Teilen Kolophonium werden 3 - 100 Gew.-Teile an (V) eingesetzt. Die Umsetzung kann bei 100-200°C, vorzugsweise bei 140-180°C, durchgeführt werden. Um eine vorzeitige Aushärtung zu vermeiden empfiehlt es sich, unter sauerstoffreien Bedingungen zu arbeiten. Zweckmäßigerweise nimmt man die Umsetzung deshalb unter Stickstoffatmosphäre vor.
C₂) Geeignete Komponenten (VI) sind C₂-C₄-Alkylenoxide oder C₂-C₁₂-Alkandiole oder C₂-C₁₂-Aminoalkohole. Als Alkylenoxide kommen vor allem Ethylenoxid oder Propylenoxid in Betracht. Gut geeignete Alkandiole sind u.a. Glycol, 1,3-Propandiol und 1,4-Butandiol.

Als Aminoalkanol kann vor allem 2-Amino-ethan-1-ol, aber auch 2,2-Aminoethoxyethanol, Aminoethylethanolamin oder 3-Aminopropanol verwendet werden.

Die Menge der Komponente (VI) beträgt 2-30 Gew.-Teile pro 100 Gew.-Teilen Kolophonium. Die Umsetzung der Komponente (VI) mit (B) kann bei 100-200°C, vorzugsweise bei 130-180°C durchgeführt werden. Bei Verwendung von Alkylenoxiden kann sich eine Arbeitsweise unter erhöhtem Druck bis etwa 6 bar empfehlen.

Anschließend erfolgt die Umsetzung mit der Komponente (VII), wobei als (VII) mindestens einfach ungesättigte C₈-C₄₀-Fettsäuren, vorzugsweise Ölsäure, Rizinenfettsäure oder Leinölfettsäure geeignet sind. Die molare Menge an (VII) beträgt vorzugsweise 0,2 bis 1 mol pro Mol von (VI).

Die Umsetzung wird bei 150-250°C, vorzugsweise bei 170-210°C, durchgeführt.

Man erhält die erfindungsgemäßen Kondensationsprodukte als bräunliche Masse mit Erweichungspunkten von 10-130°C.

Man kann die erfindungsgemäßen Kondensationsprodukte auch in einer anderen Reihenfolge der Reaktionsschritte erhalten, wobei sich etwas unterschiedliche Produkte ergeben.

### Stufe D

In Stufe D erfolgt die Umsetzung des Kolophoniums (I) mit der Komponente (IV) im Sinne einer Diels-Alder- oder en-Reaktion. Geeignete Komponenten (IV) sind α,β-ungesättigte C₃-C₄-Mono- oder Dicarbonsäuren, vorzugsweise Maleinsäure oder Maleinsäureanhydrid. Die Menge an (IV) beträgt 5-40 Gew.-Teile pro 100 Gew.-Teilen Kolophonium.

Die Umsetzung kann unter den in Stufe (B) geschilderten Bedingungen vorgenommen werden.

Das Addukt (D) ist eine feste, bräunliche Masse mit einem Erweichungspunkt von 80-120°C.

### Stufe E

Das in Stufe (D) erhaltene Addukt D wird mit einer Komponente (VIa) umgesetzt. Als (VIa) kommen C₂-C₁₂-Aminoalkohole in Betracht, beispielsweise 6-Amino-hexan-1-ol oder das besonders geeignete 2-Amino-ethan-1-ol. Es werden 2-30 Gew.-Teile (VIa) auf 100 Gew.-Teile Kolophonium eingesetzt.

Man kann die Umsetzung unter den in Stufe C₂ für Aminoalkohole geschilderten Bedingungen vornehmen.

Die Aminogruppe der Komponente (VIa) reagiert mit den Carboxylgruppen der Komponenten (IV). Im Falle von Maleinsäure oder Maleinsäureanhydrid bilden sich besonders leicht Imide.

Das Kondensationsprodukt (E) ist eine feste, bräunliche Masse mit einem Erweichungspunkt von 50-150°C.

### Stufe F:

In Analogie zu Stufe (B) erfolgt eine Anbindung eines Resols aus den Komponenten (II) und (III) an das Kolophoniumgerüst von (E). Als Komponenten (II) und (III) kommen die in Stufe (A) beschriebenen Verbindungen in Betracht.

Die Menge an (II) beträgt 50-150, vorzugsweise 20-100 Gew.-Teile pro 100 Gew.-Teilen Kolophonium. Die Menge an Formaldehyd wird so gewählt, daß also ca. 1,5 bis 4,0 mol (III) pro mol (II) eingesetzt werden.

Man kann das Kondensationsprodukt (E) vorlegen und dann mit den Komponenten (II) und (III) versetzen oder zunächst das Resol herstellen, welches man dann mit (E) umsetzt. Ansonsten kann die Umsetzung unter den in Stufe (A) geschilderten Bedingungen durchgeführt werden.

Man erhält als Kondensationsprodukt (F) eine feste, bräunliche Masse mit einem Erweichungspunkt von 40-190°C.

### Stufe G

Als Komponente (VII) werden, wie unter (C₂) beschrieben, mindestens einfach ungesättigte C₈-C₄₀-Fettsäuren, vorzugsweise Ölsäure oder Rizinenfettsäure eingesetzt.

Die Menge an (VII) beträgt 10-100 Gew.-Teile in den unter (C₂) erwähnten Molverhältnissen (VII):(VI).

Die Umsetzung kann unter den in (C₂) geschilderten Bedingungen vorgenommen weden.

Man erhält die erfindungsgemäßen Kondensationsprodukte G, die einen Erweichungspunkt von 10-130°C haben.

Die erfindungsgemäßen Kondensationsprodukte auf Basis von Kolophonium lassen sich als Bindemittel für Druckpasten verwenden. Sie verleihen den beanspruchten Druckpasten alle für den Einsatz bei Tiefdruckverfahren wesentlichen Eigenschaften.

Zur Beschleunigung der Autoxidation der ungesättigten Reste können der Druckpaste entsprechende Katalysatoren (Sikkative), insbesondere Kobaltsalze zugesetzt werden.

Die Druckpaste kann zusätzlich nach 0-30 Gew.% Alkydharze enthalten.

Alkydharze sind durch Luftsauerstoff vernetzbare Polyester aus Polycarbonsäuren und Polyalkoholen, die mit Monocarbonsäuren modifiziert sind. Häufig verwendete Polycarbonsäuren sind beispielsweise Phthalsäure oder Isophthalsäure. Bei den Polyalkoholen hat Glycerin die größte Bedeutung. Die zur Modifizierung verwendeten Monocarbonsäuren entstammen natürlichen Ölen, z.B. Leinöl (vgl. Ullmanns Encyklopädie der Technischen Chemie, 3. Aufl., Bd. 14, S. 99ff).

Als Pigmente verwendet man die üblichen für Druckpasten auf Mineralölbasis geeigneten Pigmente.

Geeignete Mineralöle sind beispielsweise aliphatische und/oder aromatische Kohlenwasserstoffe und deren Gemische, welche vorzugsweise zwischen 150 und 300°C sieden.

Außerdem werden der Druckpaste noch Füllkörper und die üblichen Additive zugesetzt.

Gut geeignete Druckpasten setzen sich etwa wie folgt zusammen:
20-70 Gew.% Pigmente und Füllstoffe
2-20 Gew.% Bindemittel
0-30 Gew.% Alkydharze
Rest Mineralöl und Additive

### Beispiel 1

1336 g Kolophonium wurden unter Stickstoffatmosphäre geschmolzen und bei 100°C mit 270 g Butylphenol, 135 g Paraformaldehyd und 10 g Magnesiumoxid versetzt. Anschließend wurde das Reaktionsgemisch 4 Stunden lang bei 110°C unter Rückfluß erhitzt und dann wurde die Temperatur während einer Zeitspanne von 5 Stunden auf 200°C erhöht, wobei die leicht flüchtigen Bestandteile abdestilliert wurden. Daraufhin wurden innerhalb von 30 min. 235 g Maleinsäureanhydrid zugesetzt. Das Reaktionsgemisch wurde für weitere 2 Stunden auf 200°C erhitzt, dann auf 180°C gekühlt, mit 655 g Oleylalkohol versetzt und noch 8 Stunden auf 180°C erhitzt.

Das so erhaltene Kondensationsprodukt hatte einen Erweichungspunkt von 78°C.

### Beispiel 2

1336 g Kolophonium wurden analog Beispiel 1 zunächst mit 270 g Butylphenol, 141 g Paraformaldehyd in Gegenwart von 8 g Magnesiumoxid und 150 g Butanol und anschließend mit 235 g Maleinsäureanhydrid umgesetzt. Das Reaktionsgemisch wurde bei 160°C mit 145 g Ethanolamin versetzt, noch eine Stunde bei einer Temperatur von 160°C gehalten, dann während einer Zeitspanne von 2 Stunden auf 180°C erhitzt und anschließend mit 638 g Rizinenfettsäure versetzt. Danach wurde noch 5 Stunden auf 200°C erhitzt, wobei Wasser abdestilliert wurde. Es wurde ein Kondensationsprodukt mit einem Erweichungspunkt von 60°C erhalten.

### Beispiel 3

2004 g Kolophonium wurden bei 200°C während 30 min. mit 588 g Maleinsäureanhydrid versetzt und weitere 2 Stunden auf 200°C erhitzt. Anschließend wurde auf 150°C abgekühlt und mit 367 g Ethanolamin versetzt. Das Reaktionsgemisch wurde noch 1 Stunde auf 150°C erwärmt, dann wurde die Temperatur während einer Zeitspanne von 2 Stunden auf 180°C erhöht, wobei flüchtige Bestandteile abdestilliert wurden. 1125 g des so erhaltenen Gemisches wurden bei 100°C mit 781 g Nonylphenol, 265 g Paraformaldehyd und 150 g Butanol versetzt und 4 Stunden bei 110°C unter Rückfluß erwärmt. Anschließend wurde die Temperatur während 5 Stunden auf 180°C erhöht, wobei flüchtige Bestandteile abdestilliert wurden. Daraufhin wurde mit 630 g Rizinenfettsäure versetzt und noch 6 Stunden lang auf 180°C erwärmt.

Das so erhaltene Kondensationsprodukt hatte einen Erweichungspunkt von 70°C.

### Beispiel 4

Aus
100 g des Kondensationsproduktes gemäß Bsp. 1
100 g Pigment Heliogenblau D 7030
250 g Schlämmkreide
100 g Permanentweiß
130 g langöliges, trocknendes Rizinen-Phthalsäure-Alkydharz
100 g Dodecylbenzolsulfonat, Na-Salz
20 g Kobalt-octoat
100 g Mineralöl vom Siedebereich 160-290°C
100 g Montanwachs
wurde wie üblich eine Druckpaste hergestellt, mit der im Tiefdruckverfahren naßfestes Papier bedruckt wurde. Die bedruckten Bögen waren nicht klebrig, so daß sich die Verwendung von Zwischenblättern erübrigte. Überschüssige Farbe ließ sich vom Druckzylinder mühelos und vollständig mit 0,5 bis 1 %iger Lauge abwaschen.

Nach der Aushärtung, die etwa 5 bis 6 Tage erforderte, erwiesen sich die gestochen klaren Drucke als hervorragend alkalibeständig.

Die gleichen Resultate werden mit Druckpasten erzielt, welche statt des Kondensationsproduktes 1 die Kondensationsprodukte gemäß Bsp. 2 bzw. 3 enthielten.

## Patentansprüche (Patentansprüche für folgende(n) Vertragsstaat(en): AT, BE, CH, DE, FR, GB, IT, LI, NL, SE)

1. Kondensationsprodukte auf Basis von Kolophonium, erhältlich durch
A) Umsetzung von
100 Gew.-Teilen Kolophonium (Komponente I)
10-150 Gew.-Teilen einer in p-Stellung C₁-C₁₂-alkylsubstituierten aromatischen Monohydroxyverbindung oder in p-Stellung zu einer der Hydroxyl-Gruppen C₁-C₁₂-alkylsubstituierten aromatischen Dihydroxyverbindung (Komponente II) und
3-50 Gew.-Teilen Formaldehyd oder einer Formaldehyd liefernden Verbindung (Komponente III)
bei 50-250°C in Gegenwart einer Base, wobei aus den Komponenten II und III zunächst auch ein Vorkondensat (Resol) des mittleren Kondensationsgrades 2 bis 20 hergestellt werden kann, welches dann mit Komponente I umgesetzt wird,
B) weitere Umsetzung des in Stufe A gebildeten Kondensationsproduktes (A) bei 150-250°C mit
4-40 Gew.-Teilen einer α,β-ungesättigten C₃- oder C₄-Mono- oder Dicarbonsäure oder mit Maleinsäureanhydrid (Komponente IV) und
C₁) Umsetzung des in Stufe B gebildeten Adduktes (B) bei 100-200°C mit
3-100 Gew.-Teilen eines mindestens einfach ungesättigten aliphatischen ein- oder zweiwertigen Alkohols oder Amins oder eines mindestens einfach ungesättigten C₂-C₁₂-Aminoalkohols (Komponente V) oder
C₂) Umsetzung von (B) mit
2-30 Gew.-Teilen eines C₂-C₄-Alkylenoxids oder eines C₂-C₁₂-Alkandiols oder C₂-C₁₂-Aminoalkohols (Komponente VI) bei 100-200°C und danach mit
10-100 Gew.-Teilen einer mindestens einfach ungesättigten C₈-C₄₀-Fettsäure (Komponente VII) bei 150-250°C,
mit der Maßgabe, daß die molare Menge von Komponente (VII) 0,2-1 mol pro Mol (VI) beträgt
oder erhältlich durch
D) Umsetzung von
100 Gew.-Teilen Kolophonium (I) mit
5-40 Gew.-Teilen der Komponente (IV)
bei 150-250°C,
E) Umsetzung des in Stufe D erhaltenen Adduktes (D) bei 100-200°C mit
2-30 Gew.-Teilen eines C₂-C₁₂-Aminoalkohols (VIa),
F) weitere Umsetzung des in Stufe E erhaltenen Produktes (E) bei 50-250°C mit
10-150 Gew.-Teilen der Komponente II und
3-50 Gew.-Teilen der Komponente III
in Gegenwart einer Base oder mit
10-200 Gew.-Teilen eines aus den Komponenten II und III vorgebildeten Resols des mittleren Kondensationsgrades 2 bis 20 und
G) Umsetzung des in Stufe F erhaltenen Kondensationsproduktes (F) bei 150-250°C mit
10-100 Gew.-Teilen der Komponente VII in den unter (C₂) genannten Molverhältnissen (VII):(VI).

2. Verfahren zur Herstellung der Kondensationsprodukte gemäß Anspruch 1, dadurch gekennzeichnet, daß man es gemäß den in Anspruch 1 genannten Maßnahmen vornimmt.

3. Verwendung der Kondensationsprodukte gemäß Anspruch 1 als Bindemittel in Druckpasten.

4. Mittels Luftsauerstoff aushärtende Druckpasten auf Mineralölbasis, enthaltend neben den hierfür üblichen Komponenten als Bindemittel 2-20 Gew.% der Kondensationsprodukte gemäß Anspruch 1.

## Patentansprüche (Patentansprüche für folgende(n) Vertragsstaat(en): ES)

1. Verfahren zur Herstellung von Kondensationsprodukten auf Basis von Kolophonium, dadurch gekennzeichnet, daß man diese Kondensationsprodukte erhält durch
A) Umsetzung von
100 Gew.-Teilen
Kolophonium (Komponente I)
10-150 Gew.-Teilen
einer in p-Stellung C₁-C₁₂-alkylsubstituierten aromatischen Monohydroxiverbindung oder in p-Stellung zu einer der Hydroxyl-Gruppen C₁-C₁₂-alkylsubstituierten aromatischen Dihydroxiverbindung (Komponente II) und
3-50 Gew.-Teilen
Formaldehyd oder einer Formaldehyd liefernden Verbindung (Komponente III)
bei 50-250°C in Gegenwart einer Base, wobei aus den Komponenten II und III zunächst auch ein Vorkondensat (Resol) des mittleren Kondensationsgrades 2 bis 20 hergestellt werden kann, welches dann mit Komponente I umgesetzt wird,
B) weitere Umsetzung des in Stufe A gebildeten Kondensationsproduktes (A) bei 150-250°C mit
4-40 Gew.-Teileneiner α,β-ungesättigten C₃- oder C₄-Mono- oder Dicarbonsäure oder mit Maleinsäureanhydrid (Komponente IV) und
C₁) Umsetzung des in Stufe B gebildeten Adduktes (B) bei 100-200°C mit
3-100 Gew.-Teileneines mindestens einfach ungesättigten aliphatischen ein- oder zweiwertigen Alkohols oder Amins oder eines mindestens einfach ungesättigten C₂-C₁₂-Aminoalkohols (Komponente V) oder
C₂) Umsetzung von (B) mit
2-30 Gew.-Teilen
eines C₂-C₄-Alkylenoxids oder eines C₂-C₁₂-Alkandiols oder C₂-C₁₂-Aminoalkohols (Komponente VI) bei 100-200°C und danach mit
10-100 Gew.-Teilen
einer mindestens einfach ungesättigten C₈-C₄₀-Fettsäure (Komponente VII) bei 150-250°C,
mit der Maßgabe, daß die molare Menge von Komponente (VII) 0,2-1 mol pro Mol (VI) beträgt
oder durch
D) Umsetzung von
100 Gew.-Teilen
Kolophonium (I) mit
5-40 Gew.-Teilen
der Komponente (IV)
bei 150-250°C,
E) Umsetzung des in Stufe D erhaltenen Adduktes (D) bei 100-200°C mit
2-30 Gew.-Teileneines C₂-C₁₂-Aminoalkohols (VIa),
F) weitere Umsetzung des in Stufe E erhaltenen Produktes (E) bei 50-250°C mit
10-150 Gew.-Teilender Komponente II und
3-50 Gew.-Teilen der Komponente III
in Gegenwart einer Base oder mit
10-200 Gew.-Teileneines aus den Komponenten II und III vorgebildeten Resols des mittleren Kondensationsgrades 2 bis 20 und
G) Umsetzung des in Stufe F erhaltenen Kondensationsproduktes (F) bei 150-250°C mit
10-100 Gew.-Teilen
der Komponente VII in den unter (C₂) genannten Molverhältnissen (VII):(VI).

2. Verfahren zur Herstellung von Druckpasten, dadurch gekennzeichnet, daß man die Kondensationsprodukte gemäß Anspruch 1 als Bindemittel verwendet.

3. Verfahren zur Herstellung von mittels Luftsauerstoff aushärtenden Druckpasten auf Mineralölbasis, dadurch gekennzeichnet, daß diese Druckpasten neben den üblichen Komponenten 2-20 Gew.-% der Kondensationsprodukte gemäß Anspruch 1 enthalten.

## Claims (Claims for the following Contracting State(s): AT, BE, CH, DE, FR, GB, IT, LI, NL, SE)

1. A condensation product based on rosin, obtainable by
A) reaction of
100 parts by weight of rosin (component I)
10-150 parts by weight of an aromatic monohydroxy compound substituted by C₁-C₁₂-alkyl in the p-position or an aromatic dihydroxy compound subsituted by C₁-C₁₂-alkyl in the p-position to one of the hydroxyl groups (component II) and
3-50 parts by weight of formaldehyde or a formaldehyde donor compound (component III)
at 50-250°C in the presence of a base, although it is also possible first to prepare from components II and III a precondensate (resol) of an average degree of condensation of from 2 to 20, which is then reacted with component I,
B) further reaction of the stage A condensation product (A) at 150-250°C with
4-40 parts by weight of an α,β-unsaturated C₃- or C₄-mono- or dicarboxylic acid or with maleic anhydride (component IV) and
C₁) reaction of the stage B adduct (B) at 100-200°C with
3-100 parts by weight of a monounsaturated or polyunsaturated aliphatic monohydric or dihydric alcohol or amine or a monounsaturated or polyunsaturated C₂-C₁₂-aminoalcohol (component V) or
C₂) reaction of (B) with
2-30 parts by weight of a C₂-C₄-alkylene oxide or of a C₂-C₁₂-alkanediol or C₂-C₁₂-aminoalcohol (component VI) at 100-200°C and then with
10-100 parts by weight of a monounsaturated or polyunsaturated C₈-C₄₀ fatty acid (component VII) at 150-250°C,
with the proviso that the molar amount of component (VII) is 0.2-1 mole per mole of (VI),
or obtainable by
D) reaction of
100 parts by weight of rosin (I) with
5-40 parts by weight of component (IV)
at 150-250°C,
E) reaction of the stage D adduct (D) at 100-200°C with
2-30 parts by weight of a C₂-C₁₂-aminoalcohol (VIa),
F) further reaction of the stage E product (E) at 50-250°C with
10-150 parts by weight of component II and
3-50 parts by weight of component III
in the presence of a base or with
10-200 parts by weight of a component II/component III resol of an average degree of condensation of from 2 to 20 and
G) reaction of the stage F condensation product (F) at 150-250°C with
10-100 parts by weight of component VII in the molar ratios of (VII):(VI) mentioned under (C₂).

2. A process for preparing a condensation product as claimed in claim 1, which comprises taking the measures mentioned in claim 1.

3. The use of a condensation product as claimed in claim 1 as a binder in print pastes.

4. A print paste which is based upon a mineral oil and is curable by means of atmospheric oxygen, containing 2-20% by weight of a condensation product as claimed in claim 1 as a binder, as well as customary components.

## Claims (Claims for the following Contracting State(s): ES)

1. A process for preparing a condensation product based on rosin, which is obtained by
A) reaction of
100 parts by weight of rosin (component I)
10-150 parts by weight of an aromatic monohydroxy compound substituted by C₁-C₁₂-alkyl in the p-position or an aromatic dihydroxy compound substituted by C₁-C₁₂-alkyl in the p-position to one of the hydroxyl groups (component II) and
3-50 parts by weight of formaldehyde or a formaldehyde donor compound (component III)
at 50-250°C in the presence of a base, although it is also possible first to prepare from components II and III a precondensate (resol) of an average degree of condensation of from 2 to 20, which is then reacted with component I,
B) further reaction of the stage A condensation product (A) at 150-250°C with
4-40 parts by weight of an α,β-unsaturated C₃- or C₄-mono- or dicarboxylic acid or with maleic anhydride (component IV) and
C₁) reaction of the stage B adduct (B) at 100-200°C with
3-100 parts by weight of a monounsaturated or polyunsaturated aliphatic monohydric or dihydric alcohol or amine or a monounsaturated or polyunsaturated C₂-C₁₂-aminoalcohol (component V) or
C₂) reaction of (B) with
2-30 parts by weight of a C₂-C₄-alkylene oxide or of a C₂-C₁₂-alkanediol or C₂-C₁₂-aminoalcohol (component VI) at 100-200°C and then with
10-100 parts by weight of a monounsaturated or polyunsaturated C₈-C₄₀ fatty acid (component VII) at 150-250°C,
with the proviso that the molar amount of component (VII) is 0.2-1 mole per mole of (VI),
or by
D) reaction of
100 parts by weight of rosin (I) with
5-40 parts by weight of component (IV)
at 150-250°C,
E) reaction of the stage D adduct (D) at 100-200°C with
2-30 parts by weight of a C₂-C₁₂-aminoalcohol (VIa),
F) further reaction of the stage E product (E) at 50-250°C with
10-150 parts by weight of component II and
3-50 parts by weight of component III
in the presence of a base or with
10-200 parts by weight of a component II/component III resol of an average degree of condensation of from 2 to 20 and
G) reaction of the stage F condensation product (F) at 150-250°C with
10-100 parts by weight of component VII in the molar ratios of (VII):(VI) mentioned under (C₂).

2. A process for preparing a print paste, which comprises using the condensation product of claim 1 as a binder.

3. A process for preparing a print paste which is based upon a mineral oil and is curable by means of atmospheric oxygen, containing 2-20% by weight of a condensation product as claimed in claim 1, as well as customary components.

## Revendications (Revendications pour l'(les) Etat(s) contractant(s) suivant(s): AT, BE, CH, DE, FR, GB, IT, LI, NL, SE)

1. Produits de condensation à base de colophane obtenus par :
A) réaction à 50-250°C, en présence d'une base de
100 parties en poids de colophane (composant I)
10-150 parties en poids d'un composé monohydroxy aromatique substitué par alkyle en C1-C12 en position p, ou d'un composé dihydroxy aromatique substitué par alkyle en C1-C12 en position p sur un des groupes hydroxyle (composant II), et
3-50 parties en poids de formaldéhyde ou d'un composé formant du formaldéhyde (composant III)
des composants II et III pouvant d'abord être obtenus aussi un précondensat (Resol) de degré de condensation moyen 2 à 20, qui est mis à réagir alors avec le composant I
B) nouvelle réaction du produit de condensation (A) formé dans l'étape A, à 150-290°C avec
4-40 parties en poids d'un acide mono- ou dicarboxylique en C3 ou C4 insaturé en α-β ou avec anhydride maléique (composant IV) et
C1) réaction du produit d'addition (B) formé à l'étape B) à 100-200 °C avec
3-100 parties en poids d'un alcool ou amine mono- ou bivalent aliphatique au moins une fois insaturé ou d'un amino-alcool en C2-C12 au moins une fois insaturé (composant V) ou
C2) réaction de (B) avec
2-30 parties en poids d'un alcylèneoxyde en C2-C4 ou d'un alcanediol en C2-C12 ou aminoalcool en C2-C12 (composant VI) à 100-200° et ensuite avec
10-100 parties en poids d'un acide gras en C8-C40 insaturé au moins une fois (composant VII) à 150-250°C sous réserve que la quantité molaire du composant (VII) soit de 0,2-1 mole par mole (VI)
ou obtenus par
D) réaction, à 15 à 250°C de
100 parties en poids de colophane (I) avec
5-40 parties en poids du composant (IV)
E) réaction du produit d'addition (D) obtenu à l'étape D, à 100-200°C, avec 2-30 parties en poids d'un aminoalcool en C2-C12 (VIa)
F) nouvelle réaction du produit (E) obtenu à l'étape E, à 50-250°C avec
10-150 parties en poids du composant III et
3-50 parties en poids du composant III
en présence d'une base ou avec
100-200 parties en poids d'un resol de degré de condensation 2 à 20, préformé des composants II et III, et
G) réaction du produit de condensation (F) obtenu à l'étape F à 150-250°C avec
10-100 parties en poids du composant VII dans les rapports molaires (VII)/(VI) indiqués sous (C2).

2. Procédé de préparation des produits de condensation selon la revendication 1, caractérisé en ce que l'on applique les mesures indiquées dans la revendication 1.

3. Utilisation des produits de condensation selon la revendication 1, comme liants dans les pâtes d'impression.

4. Pâtes d'impression à base d'huile minérale durcissant à l'oxygène de l'air, contenant outre les composants usuels pour cela, 21 à 20 % des produits de condensation selon la revendication 1 comme liants.

## Revendications (Revendications pour l'(les) Etat(s) contractant(s) suivant(s): ES)

1. Procédé de préparation de produits de condensation à base de colophane, caractérisé par le fait que ces produits de condensation sont obtenus par :
A) réaction à 50-250°C, en présence d'une base de
100 parties en poids de colophane (composant I)
10-150 parties en poids d'un composé monohydroxy aromatique substitué par alkyle en C1-C12 en position p, ou d'un composé dihydroxy aromatiques substitué par alkyle en C1-C12 en position p sur un des groupes hydroxyle (composant II), et
3-50 parties en poids de formaldéhyde ou d'un composé formant du formaldéhyde (composant III)
des composants II et III pouvant d'abord être obtenus aussi un précondensat (Resol) de degré de condensation moyen 2 à 20, qui est mis à réagir alors avec le composant I
B) nouvelle réaction du produit de condensation (A) formé dans l'étape A, à 150-290°C avec
4-40 parties en poids d'un acide mono- ou dicarboxylique en C3 ou C4 insaturé en α-β ou avec anhydride maléique (composant IV) et
C1) réaction du produit d'addition (B) formé à l'étape (B) à 100-200 °C avec
3-100 parties en poids d'un alcool ou amine mono- ou bivalent aliphatique au moins une fois insaturé ou d'un amino-alcool en C2-C12 au moins une fois insaturé (composant V) ou
C2) réaction de (B) avec
2-30 parties en poids d'un alcylèneoxyde en C2-C4 ou d'un alcanediol en C2-C12 ou aminoalcool en C2-C12 (composant VI) à 100-200° et ensuite avec
10-100 parties en poids d'un acide gras en C8-C40 insaturé au moins une fois (composant VII) à 150-250°C sous réserve que la quantité molaire du composant (VII) soit de 0,2-1 mole par mole (VI)
ou obtenus par
D) réaction, à 15 à 250°C de
100 parties en poids de colophane (I) avec
5-40 parties en poids du composant (IV)
E) réaction du produit d'addition (D) obtenu à l'étape D, à 100-200°C, avec 2-30 parties en poids d'un aminoalcool en C2-C12 (VIa)
F) nouvelle réaction du produit (E) obtenu à l'étape E, à 50-250°C avec
10-150 parties en poids du composant III et
3-50 parties en poids du composant III
en présence d'une base ou avec
100-200 parties en poids d'un resol de degré de condensation 2 à 20 préformé des composants II et III, et
G) réaction du produit de condensation (F) obtenu à l'étape F à 150-250°C avec
10-100 parties en poids du composant VII dans les rapports molaires (VII)/(VI) indiqués sous (C2).

2. Procédé de préparation de pâtes d'impression, caractérisé par le fait que l'on utilise comme liants les produits de condensation obtenus selon la revendication 1.

3. Procédé de préparation de pâtes d'impression à base d'huile minérale durcissant à l'oxygène de l'air, caractérisé par le fait que ces pâtes d'impression contiennent outre les composants usuels pour cela, 21 à 20 % des produits de condensation selon la revendication 1 comme liants.
